# EUROPEAN PATENT SPECIFICATION

(11) **EP 0 384 270 B1**
(45) Date of publication and mention of the grant of the patent: **07.02.1996**
(21) Application number: 90102832.4
(22) Date of filing: 13.02.1990
(51) Int. Cl.: B29C 51/30, B29C 51/08, B29C 51/14

(54) **A die for the manufacture of lined panels, particulary for motor vehicle interiors**
Form zur Herstellung überzogener Paneele, insbesondere für Innenausstattungen von Kraftfahrzeugen
Matrice pour la fabrication de panneaux revêtus, en particulier pour les intérieurs de véhicules

(30) Priority: 22.02.1989 IT 1952889
(43) Date of publication of application: 29.08.1990
(73) Proprietor: COMMER S.P.A., I-20063 Cernusco sul Naviglio Milano (IT)
(72) Inventor: Siano, Dante, I-20093 Cologno Monzese (IT)
(74) Representative: Marietti, Giuseppe

(56) References cited:
- EP-A- 0 348 357
- DE-A- 3 537 997
- PATENT ABSTRACTS OF JAPAN vol. 8, no. 87 (M-291)(1524) 20 April 1984 & JP-A-59 005 020 (INOUE EMU TEE PII K.K.) 11 January 1984

## Description

The present invention concerns a die to manufacture laminated composite panels, particularly for interiors of automobiles and motor vehicles in general.

The inside trimming of vehicles for public and private transport normally envisages the use of panels consisting of a supporting element constituted by a shaped plate of composite material, thick enough to provide the panel with adequate resistance, and by a covering which is often of mixed type, namely with portions of smeared calendered plastic, or imitation leather, and portions of fabric lying continuously.

The configuration of the mixed covering may be complex, with areas of one material surrounded by areas of the other material, or may more simply present the two covering materials joined to each other along an open line. In both cases the line connecting the two materials will be hereafter indicated as "junction line".

To manufacture said panels, dies formed by two main portions are used; a heated plate of composite thermoplastic material is placed on a die bottom portion, while a die top portion, when closing, leads a covering, stretched on a positioning frame, in contact with the heated plate, thus causing the coupling between covering and plate.

In order to exactly position the covering on the plate, besides the abovementioned frame, the known technique envisages mobile and projecting pressing members (also named dandy members), placed inside both said half-dies and having a profile corresponding to that of the junction line. During molding, said dandy members are elastically pushed against each other by means of springs to clamp the covering and the plate in correspondence to the junction line.

EP-A-0145832 discloses a die comprising two half dies, each provided with pressing and coupling members that are slidable within the die to clamp and press an area corresponding to the joining line of two lining materials to a base thermoplastic material. This clamping is carried out before the whole lining material is coupled to the whole base material.

EP-A-0348357 discloses a similar die.

This die configuration has some inconveniences in that the construction of the two half-dies become complex and moreover the compression exerted on the softened thermoplastic plate by the concomitant action of the dandy members and of the reciprocal movement of the two half-dies, can cause on said plate, in correspondence to the dandy members, engravings and thinnings which are often excessive and cause the finished panel to be rejected.

On the other side, in the known die construction, it is not possible to adjust the pressure exerted on the covering and plate, for instance by decreasing the dandy member spring strength.

In fact, attempts of this kind would more easily lead to a non correct clamping of the covering on the plate before coupling or, mainly due to differences in operative conditions and characteristics of the plate compressive strenght, to very variable results which would still cause panel rejection.

Furthermore, after coupling, the junction line tends to remain well visible in the groove produced by the dandy members, and this negatively affects the product from an aesthetic point of view, and therefore indirectly from the commercial point of view as well.

An object of the present invention is therefore to overcome the abovementioned inconveniences of the known technique, by providing a die of the abovedescribed type having a reduced complexity and cost, allowing a correct positioning of the covering on the plate without jeopardizing the finished panel consistency, and finally allowing to hide the junction line of the covering.

This object is achieved by means of the invention, which consists of a die for coupling a supporting plate made of heated thermoplastic material with a mixed surface covering constituted by a portion of plastics material and a portion of fabric adjacent to each other along one or more junction and/or superimposition lines, characterized according to claim 1.

The invention will be now further described with particular reference to a preferred non-limiting embodiment thereof, as shown in the accompanying drawings, in which:
- figure 1 schematically shows a longitudinal section of a die according to the invention, in its open position;
- figure 2 shows the die of figure 1 in its intermediate position with a dandy member compressing the junction line on the plate;
- figure 3 shows the die of Fig. 1 in a completely closed position;
- figure 4 is a cross-sectional view according to the line A-A of fig. 1;
- figure 5 is a cross-sectional view according to the line A-A of fig. 2;
- figure 6 shows a laminated panel and the corresponding structure of the pressing member; and
- figure 7 shows a detail of the die in a magnified cross-section.

Referring first of all to figure 6, a possible panel obtainable by means of a die according to the invention is shown. More precisely, a panel 8 is formed by a supporting plate made of filled thermoplastic material (such as for example materials consisting of polyethylene and inert fillers), on which imitation leather or smeared or calendered plastics material, for example PVC, and a layer of fabric or cloth are applied, by pressure, in two contiguous areas 19 and 20 respectively. With reference to figures from 1 to 5, a die according to the invention is illustrated, in open position and ready for the production of said panel. For clarity of illustration, the figures schematically show, in longitudinal or cross section, only the main components of the die.

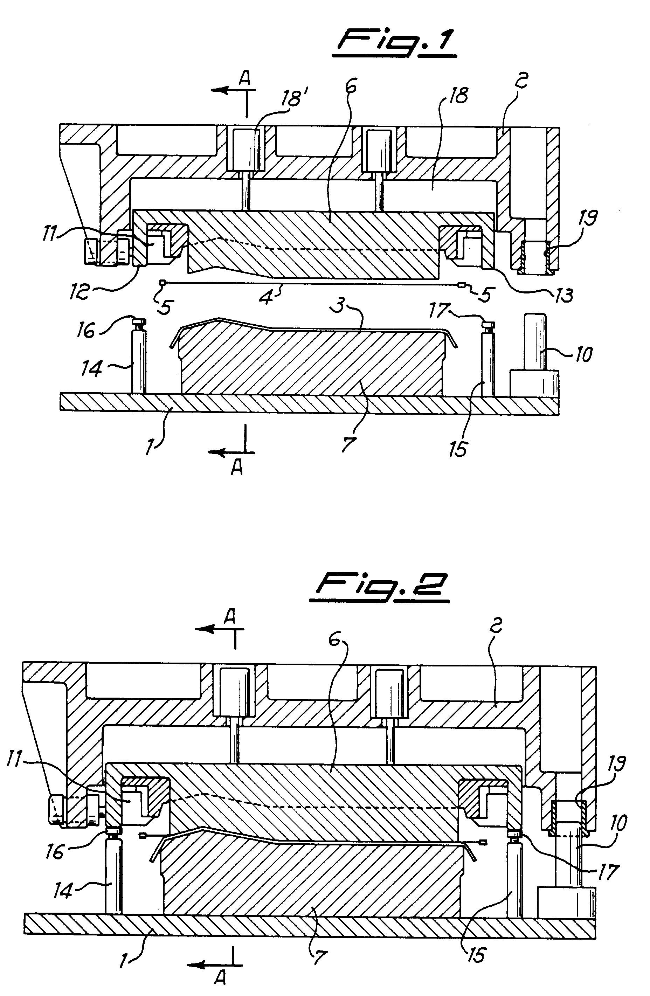

The die according to the invention comprises a bottom half-die 1 and a vertically movable top half-die 2, and is provided with suitable pins and holes such as those indicated by 10 and 19 in fig. 1.

The die is properly inserted in a press or other device of the usual type with means for parts displacement, heating, etc., which are not illustrated in that they are conventional and not coming within the field of the invention.

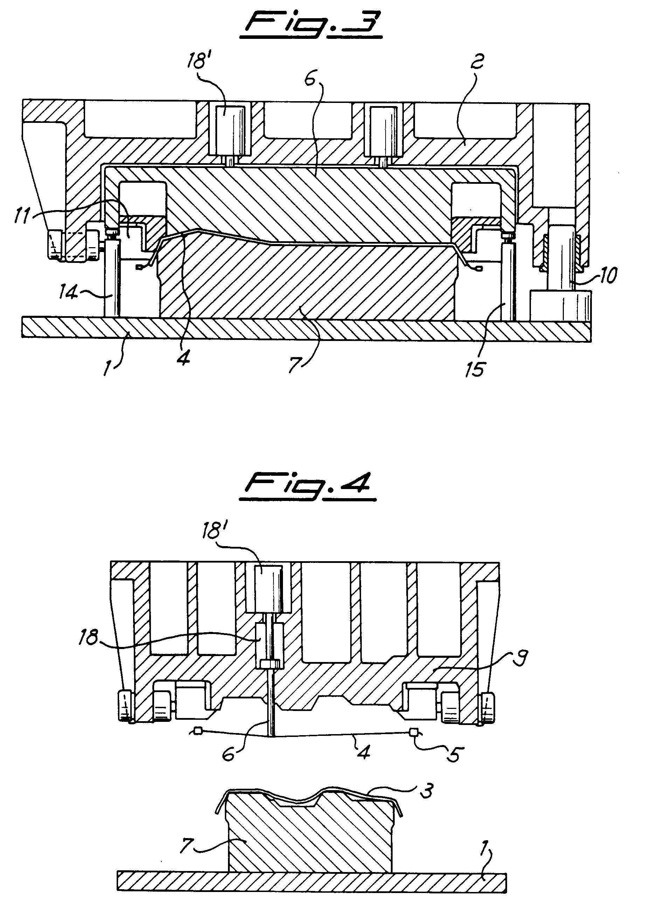

The bottom half-die 1 bears a matrix 7 reproducing the shape to be given to the panel 8; a matrix 9 of complementary shape is born by the top half-die (figures 4 and 5).

Between the two half-dies, a frame 5 is foreseen to hold stretched in position a covering 4 consisting of a semifinished product, constituted by imitation leather or similar sheet of plastic material and a fabric, joined to each other along a junction line.

In the top half-die 2 a pressing or dandy member 6 is provided, projecting from and vertically movable in a slot 18 of the half-die housing it.

The lower profile of the pressing member 6 corresponds to the junction line between the fabric and the plastic sheet of the covering and is positioned in correspondence to said line.

The pressing member 6 extends outside the molding area with two appendices or projections 12 and 13 capable to abut against two push rods 14 and 15 respectively, provided on the base of the bottom half-die. The push rods are upperly provided with elements 16 and 17 allowing their adjustment in height.

In fig. 1 said elements are constituted by small blocks having a threaded portion more or less deeply screwable inside threaded seats provided in the push rods.

In this way it is also possible to independently adjust the height of the push rods, for instance to compensate wear or a locally different degree of resistance of the materials.

In any case the push rods 14 and 15 prevent the dandy member 6 from excessively compressing the plate 3, by limiting the travel of said dandy member 6 to a preset value. It is underlined here that the word "travel" means the distance downwardly covered by the elongated member 6, from its upper position shown in figure 1 to its lower position of engagement of the push rods and the plate, as shown in figure 2.

According to a known technique, to form the panel, a plate 3 of heated composite thermoplastic material is positioned on the matrix 7 and the covering 4 is stretched on the frame 5 placed between the two half-dies as shown in figures 1 to 5. The top die 2 is then lowered and, during closure, the pressing member first engages the covering along the junction line and clamps it against the plate on the bottom die, thus positioning it in a univocal way (Figures 2 and 5).

Subsequently the die is completely closed to put all the covering 4 in contact with plate 3, which is simultaneously shaped in the desired way, to obtain a coupling between plate and covering. In the die according to the present invention, the projecting appendices 12 and 13 of the pressing member abut against the push rods 14 and 15 avoiding its excessive lowering and deep sinking into the plate (Fig. 3).

The travel of the pressing or dandy member is thus limited to a preset value; namely, the lower edge of the pressing member 6 is stopped at a predetermined distance from the matrix 7. If necessary the value of said travel can be adjusted by means of the small blocks 16 and 17 to vary the push rods height, as a function of the features of the produced laminate. If necessary, the small blocks 16 and 17 may be even positioned at different heights.

Once the projections of the pressing member have abutted against the push rods, the remaining downward movement of the top half-die 2 is absorbed by a displacement, elastically held up by the elements 18′, inside the slot 18.

Fig. 6 schematically shows a laminated panel 8 in which the line between the calendered PVC sheet 19 and the fabric 20 is not substantially rectilinear, but presents two foldings, namely an elbow curve. This configuration would cause the dandy member 6A to be differently stressed on the push rods 14 and 15, and therefore a deflection of the dandy member itself might occur. By suitably adjusting the number and position or lying of the push rods, it is possible to obtain a uniform distribution of the stresses applied on the appendices and on the pressing member.

For example, in the case of figure 6, to provide the pressing member 6A with an appropriate abutment, on the extension thereof an angled portion 27 is provided, designed for abutment against an additional push rod 28, as shown by dash lines. An uniform distribution of stresses is thus obtained, avoiding deflections which could affect the quality of the product. A similar angled portion 25 and an additional push rod 26 can be provided also in correspondence to the extension 13A.

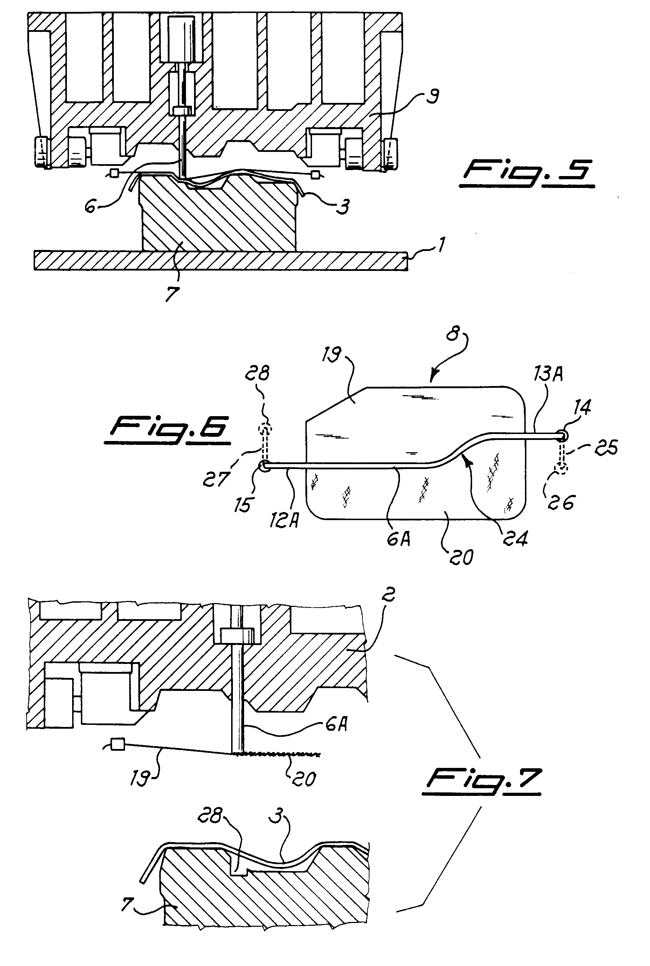

According to further characteristic of the invention, as shown in Fig. 7, the bottom half-die 1 is provided with a gap 28 extending in correspondence to the pressing member. During molding, the dandy member 6A can cause the plate 3 and the junction line of the covering to partly penetrate into the gap 28. It is therefore possible to obtain in the lined panel a slot wherein the junction line between imitation leather 19 and fabric 20 is housed, obtaining a so-called "shadow effect" and improving the aesthetic appearance of the panel.

The invention has been illustrated with particular reference to preferred embodiments, however all obvious variations and/or improvements which will be evident to those skilled in the art come within its scope.

## Claims

1. A die in two parts for coupling a supporting plate (3) of heated thermoplastics material with a mixed surface covering (4) formed by a portion of plastics material (19) and a portion of fabric material (20) adjacent to each other along one or more junction and/or superimposition lines, wherein at least one of the parts or half-dies (9) is provided with a projecting pressing member (6, 6A), vertically movable with respect to the half-die (2) housing it and projecting in correspondence to the junction and/or superimposition line of plastic (19) and fabric (20) materials, in order to position said junction line on said thermoplastic plate (4) before the coupling of the whole covering (4), characterized in that said pressing member (6, 6A) extends outside the molding area with at least two appendices (12, 13), and in that the other half-die (1) is provided with at least two protruding push rods (14, 15) capable to engage said appendices (12,13) in order to limit the travel of said pressing member to a preset arid adjustable value.

2. A die according to claim 1, characterized in that the number and lying of said push rods (14, 15) are such as to obtain a uniform distribution of the stresses applied on the appendices (12, 13) and the pressing member (6, 6A).

3. A die according to claim 2, characterized in that, when said junction line is not substantially rectilinear, said pressing member appendices (12, 13) comprise angled portions (27) for abutment on additional push rods (28) placed on the other half-die.

4. A die according to one of claims 1 to 3, characterized in that said push rods (14, 15) carry one or more adjustable elements such as screwable small blocks (16, 17) or the like.

5. A die according to any preceding claim, characterized in that the half-die (1) without said pressing member is provided with a gap or groove positioned in correspondence to the plate area on which said pressing member (6, 6A) insists, said gap having a sufficient size to perform on the lined plate a slot housing said junction and/or superimposition line.

6. The use of a die according to any claim 1 to 5, for the production of lined panels having a thermoplastic base (3) and a mixed surface covering (4).

## Patentansprüche

1. Zweigeteilte Form zur Verbindung einer Trägerplatte (3) aus erwärmtem thermoplastischen Werkstoff mit einer zusammengesetzten Oberflächenhülle (4), die aus einem Abschnitt aus Kunststoffwerkstoff (19) und einem Abschnitt aus Bespannungswerkstoff (20) geformt wird, die längs einer oder mehrerer Verbindungen und/oder übereinanderliegenden Linien aneinanderliegen, wobei wenigstens eines der Teile oder Halbformen (9) mit einem vorstehenden Preßelement (6, 6A) versehen ist, das vertikal in bezug auf die Halbform (2) bewegbar ist und in dieser aufgenommen wird und in Abhängigkeit von den Verbindungen und/oder der übereinanderliegenden Linie des Kunststoffwerkstoffs (19) und des Bespannungswerkstoffs (20) vorsteht, um die Verbindungslinie auf der thermoplastischen Platte (4) vor der Verbindung der gesamten Hülle (4) zu positionieren, dadurch gekennzeichnet, daß sich das Preßelement (6, 6A) mit wenigstens zwei Verlängerungen (12, 13) außerhalb des Formbereiches erstreckt, wobei die andere Halbform (1) mit wenigstens zwei vorstehenden Stoßstangen (14, 15) versehen ist, die in Eingriff mit den Verlängerungen (12, 13) stehen, um das Vordringen das Druckteils auf einen vorgewählten einstellbaren Wert zu begrenzen.

2. Form nach Anspruch 1, dadurch gekennzeichnet, daß die Anzahl und die Anordnung der Stoßstangen (14, 15) derart gewählt sind, daß eine gleichmäßige Verteilung der Drücke auf die Verlängerungen (12, 13) und das Preßelement (6, 6A) erreicht wird.

3. Form nach Anspruch 2, dadurch gekennzeichnet, daß dann, wenn die Verbindungslinie im wesentlichen nicht geradlinig ist, die Preßteilverlängerungen (12, 13) gewinkelte Teile (27) als Gegenlager für zusätzliche Stoßstangen (28) aufweisen, die auf der anderen Halbform angeordnet sind.

4. Form nach einem der Ansprüche 1 bis 3, dadurch gekennzeichnet, daß die Stoßstangen (14, 15) ein oder mehrere einstellbare Elemente wie schraubbare kleine Blöche (16, 17) oder dergleichen tragen.

5. Form nach einem der Ansprüche 1 bis 4, dadurch gekennzeichnet, daß die Halbform (1) ohne das Preßelement (6, 6A) mit einem Spalt oder einer Aushöhlung versehen ist, die in Übereinstimmung mit dem ebenen Bereich angeordnet ist, auf den das Preßelement (6, 6A) einwirkt, wobei der Spalt eins ausreichende Größe aufweist, um auf der bekleideten Platte eine Kerbe auszubilden, die die Verbindungspunkte und/oder übereinanderliegenden Linien enthält.

6. Verwendung dar Form nach einem der Ansprüche 1 bis 5 für die Herstellung bekleideter Platten, die eine thermoplastische Grundplatte (3) und eine zusammengesetzte Oberflächenhülle (4) aufweisen.

## Revendications

1. Matrice en deux parties pour lier une plaque de support (3) en matière thermoplastique chauffée à un revêtement de surface mixte (4) constitué par une portion de matière plastique (19) et une portion de matière textile (20) mutuellement adjacentes le long d'une ou plusieurs lignes de jonction et/ou de superposition, dans laquelle au moins une des parties ou demi-matrices (9) comporte un élément de pression en saillie (6,6A), qui peut se déplacer verticalement par rapport à la demimatrice (2) le recevant et qui fait saillie en correspondance de la ligne de jonction et/ou de superposition de la matière plastique (19) et de la matière textile (20), afin de positionner ladite ligne de jonction sur ladite plaque thermoplastique (4) avant la liaison de l'ensemble du revêtement (4), caractérisée en ce que ledit élément de pression (6,6A) est prolongé en dehors de la zone de moulage par au moins deux appendices (12,13), et en ce que l'autre demi-matrice (1) comporte au moins deux tiges de poussoir en saillie (14,15) qui peuvent venir en contact avec lesdits appendices (12,13) afin de limiter la course dudit élément de pression à une valeur prédéterminée et réglable.

2. Matrice suivant la revendication 1, caractérisée en ce que le nombre et la position desdites tiges de poussoir (14,15) sont tels qu'on obtient une répartition uniforme des efforts appliqués sur les appendices (12, 13) et l'élément de pression (6,6A).

3. Matrice suivant la revendication 2, caractérisée en ce que, lorsque ladite ligne de jonction n'est pas sensiblement rectiligne, lesdits appendices (12,13) de l'élément de pression comprennent des parties coudées (27) qui viennent en butée contre des tiges de poussoir supplémentaires (28) prévues sur l'autre demi-matrice.

4. Matrice suivant une des revendications 1 à 3, caractérisée en ce que lesdites tiges de poussoir (14,15) portent un ou plusieurs éléments réglables, tels que des petits blocs vissables (16,17) ou analogues.

5. Matrice suivant une quelconque des revendications précédentes, caractérisée en ce que la demimatrice (1) ne comportant pas ledit élément de pression présente un creux ou une rainure située en correspondance de la région de la plaque sur laquelle s'applique ledit élément de pression (6,6A), ledit creux ayant une dimension suffisante pour engendrer, sur la plaque revêtue, une rainure contenant ladite ligne de jonction et/ou de superposition.

6. Utilisation d'une matrice suivant une quelconque des revendications 1 à 5, pour la fabrication de panneaux revêtus comprenant une base en matière thermoplastique (3) et un revêtement de surface mixte (4).
